(19) Europäisches Patentamt
European Patent Office
Office européen des brevets

(11) Veröffentlichungsnummer : **0 446 172 A2**

(12) # EUROPÄISCHE PATENTANMELDUNG

(21) Anmeldenummer : **91810131.2**

(51) Int. Cl.[5] : **H01B 1/12**

(22) Anmeldetag : **28.02.91**

(30) Priorität : **08.03.90 CH 759/90**

(43) Veröffentlichungstag der Anmeldung :
**11.09.91 Patentblatt 91/37**

(84) Benannte Vertragsstaaten :
**BE CH DE FR GB IT LI NL SE**

(71) Anmelder : **CIBA-GEIGY AG**
**Klybeckstrasse 141**
**CH-4002 Basel (CH)**

(72) Erfinder : **Wernet, Wolfgang, Dr.**
**Schillerstrasse 40**
**W-7800 Freiburg (DE)**
Erfinder : **Lohse, Friedrich, Prof.Dr.**
**Buchenstrasse 23**
**CH-4104 Oberwil (CH)**
Erfinder : **Finter, Jürgen**
**Zasiusstrasse 100**
**W-7800 Freiburg (DE)**
Erfinder : **Bleier, Hartmut, Dr.**
**Dorfstrasse 16**
**W-7800 Freiburg (DE)**
Erfinder : **Rotzinger, Bruno, Dr.**
**Dornacherstrasse 91**
**CH-4147 Aesch (CH)**
Erfinder : **Vogel, Thomas, Dr.**
**Marchstrasse 5**
**W-7800 Freiburg (DE)**

(54) **Elektrisch leitende Pressmassen und Füllstoffe aus Polyheteroaromaten und polymeren Sulfaten.**

(57) Pressmasse in Form von Teilchen aus a) mindestens einem Polyheteroaromaten oder einem Anilin in oxidierter, polykationischer Form, besonders Polypyrrol, und b) mindestens einem Polyanion eines thermoplastischen Polymeren mit sulfatierten Alkoholgruppen

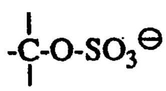

in wiederkehrenden Struktureinheiten. Formkörper aus den Pressmassen besitzen eine hohe elektrische Leitfähigkeit und gute mechanische Festigkeiten. Die Formkörper können als Elektroden, elektrisch leitende Fasern oder Bauteile zur elektromagnetischen Abschirmung verwendet werden. Die pulverförmigen Pressmassen eignen sich auch als elektrisch leitende Füllstoffe für Kunststoffe.

EP 0 446 172 A2

# ELEKTRISCH LEITENDE PRESSMASSEN UND FÜLLSTOFFE AUS POLYHETEROAROMATEN UND POLYMEREN SULFATEN

Die Erfindung betrifft Pressmassen in Form von Teilchen aus a) mindestens einem oxidierten polykationischen Polyheteroaromaten und b) mindestens einem Polyanion eines thermoplastischen Polymeren mit sulfatierten Alkoholgruppen

$$-\overset{|}{\underset{|}{C}}-O-SO_3^{\ominus}$$

in wiederkehrenden Struktureinheiten, Verfahren zur Herstellung der Pressmassen, die Verwendung der Pressmassen zur Herstellung elektrisch leitender Formkörper und die Verwendung der feinteiligen elektrisch leitenden Zusammensetzungen als Füllstoffe für Kunststoffe.

Es ist bekannt, dass man durch elektrochemische Polymerisation von Heteroaromaten, besonders Pyrrol, in Gegenwart nicht-nukleophiler Anionen elektrisch leitende Salze von polykationischen Polyheteroaromaten erhält. Die mechanischen Eigenschaften solcher in der Regel auf Anoden als Film abgeschiedener Salze von Polyheteroaromaten sind für viele Anwendungen ungenügend.

Zur Verbesserung der mechanischen Eigenschaften ist vorgeschlagen worden, Zusammensetzungen von dotierten Polyheteroaromaten in nicht-leitenden Polymeren zu verwenden, siehe z.B. Synthetic Metals, 22 (1987), 145-156; J. of Polym. Science: P.C.E., 23 (1985), 1687-1698, Bull. Chem. Soc. Jpn., 60, 3315-3320 (1987) und EP-A-0 191 726. Um die Mitverwendung von Dotierungsmitteln zu vermeiden, ist auch schon vorgeschlagen worden, bei der elektrochemischen Polymerisation nicht-nukleophile polymere Anionen mitzuverwenden, wie z.B. Polystyrolsulfonate, Polyvinylsulfonate (siehe z.B. EP-B-0 129 070 und US-A-4 552 927) oder Latices (siehe Synthetic Metals, 15 (1986), 175-182). In Bull. Chem. Soc. Jpn. 62 (1989), 234-238 sind Pressmassen beschrieben, die z.B. Polystyrolsulfonsäure als anionische Komponente enthalten.

In der DE-A-3 402 133 werden poröse Zusammensetzungen aus Polypyrrol mit z.B. Alkylsulfaten beschrieben. Es wird erwähnt, dass auch Sulfate mit polymeren Resten verwendet werden können. In der GB-A-2124 635 ist eine filmförmige Zusammensetzung aus Polypyrrol und einem chlorsulfonierten Polyvinylalkohol beschrieben. Der getrocknete Film besitzt zwar eine gute elektrische Leitfähigkeit und wird als zäh aber spröde bezeichnet, so dass er keine ausreichende mechanische Festigkeit besitzt.

In der US -A-4,692,225 wird vorgeschlagen, Pulver von dotierten Polyanilinen oder Polypyrrolen in Duroplaste, besonders Epoxidharze einzuarbeiten. Die elektrische Leitfähigkeit solcher Formkörper ist jedoch für viele Anwendungen zu niedrig.

Es besteht ein Bedarf an elektrisch leitenden polymeren Zusammensetzungen in Form von rieselfähigen Pulvern, die nach Pressverfahren zu verschiedenartigen Formkörpern verarbeitet werden können, und die gute mechanische Eigenschaften aufweisen, z.B. hohe Zug-und Biegefestigkeiten und gute Zähigkeitseigenschaften, und die gleichzeitig als Füllstoffe in Polymere eingearbeitet werden können, wobei deren Formkörper gute mechanische Eigenschaften und elektrische Leitfähigkeiten aufweisen.

Ein Gegenstand der Erfindung ist eine Pressmasse, in Form von Teilchen aus a) mindestens einem Polyheteroaromaten oder einem Anilin in oxidierter, polykationischer Form, und b) mindestens einem Polyanion eines filmbildenden thermoplastischen Polymeren mit sulfatierten Alkoholgruppen

$$-\overset{|}{\underset{|}{C}}-O-SO_3^{\ominus}$$

in wiederkehrenden Struktureinheiten.

Unter Polyheteroaromaten werden im Rahmen dieser Erfindung Homo- und Copolymere verstanden, die wiederkehrende heteroaromatische Struktureinheiten enthalten. Sie können höhermolekular oder auch oligomer sein, sofern sie bei Raumtemperatur fest sind und Filme zu bilden vermögen. Bevorzugt sind Polyheteroaromaten aus 5- oder 6-gliedrigen Ringen, die 1 bis 3, bevorzugt 1 Heteroatom aus der Grupe -O-, -S- und -N- enthalten, und deren C-Atome unsubstituiert oder mit $C_1$-$C_{16}$-Alkyl, besonders $C_1$-$C_{12}$-Alkyl substituiert sind. Vorzugsweise sind 2 C-Atome nicht substituiert, um die elektrochemische bzw. chemische Polymerisation durchführen zu können. Der 5- oder 6-gliedrige Ring ist bevorzugt ausgewählt aus der Gruppe Pyrrol, Thiophen, Furan, 2,2'-Bipyrrol, 2,2'-Bithiophen, 2,2'-Bifuran, Thiazol, Oxazol, Thiadiazol und Imidazol.

Besonders bevorzugt ist der Polyheteroaromat aus einem Pyrrol der Formel

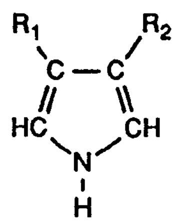

gebildet, worin $R_1$ und $R_2$ unabhängig voneinander H oder $C_1$-$C_{16}$-Alkyl, $C_1$-$C_{16}$-Alkoxy oder $R_1$ und $R_2$ zusammen Tri- oder Tetramethylen bedeuten. $R_1$ und $R_2$ können z.B. für $C_1$-$C_{12}$-Alkyl oder $C_1$-$C_{12}$-Alkoxy, wie z.B. für Methyl, Methoxy oder Ethyl bzw. Ethoxy stehen, und stellen besonders H dar. Die NH-Gruppe des Pyrrols kann mit $C_1$-$C_{12}$-Alkyl, besonders $C_1$-$C_6$-Alkyl substituiert sein. $R_1$ und $R_2$ zusammen können auch für Tri- oder Tetramethylen stehen.

Als Aniline sind z.B. Anilin selbst und in 3-Stellung mit $C_1$-$C_{12}$-Alkyl oder $C_1$-$C_{12}$-Alkoxy, bevorzugt $C_1$-$C_6$-Alkyl oder $C_1$-$C_6$-Alkoxy substituiertes Anilin geeignet.

Die erfindungsgemässe Pressmasse enthält pro Struktureinheit des Polyheteroaromaten bevorzugt 0,1 bis 0,5, besonders bevorzugt 0,2 bis 0,4 Struktureinheiten mit sulfatierten Alkoholgruppen

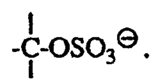

Die Teilchengrösse beträgt z.B. 1 bis 5000 µm, bevorzugt 1 bis 3000 µm und besonders bevorzugt 10 bis 1000 µm.

Das in der erfindungsgemässen Pressmasse verwendete thermoplastische Polymer mit versalzten sulfatierten Alkoholgruppen

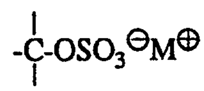

weist vorzugsweise eine Glasumwandlungstemperatur von -100 bis 350°C, besonders bevorzugt -50 bis 250°C auf, gemessen nach der DSC-Methode (Differential-Scannning-Calorimetry). $M^{\oplus}$ bedeutet ein Alkalimetall- oder ein Ammoniumkation, die nachfolgend für die Polymeren beschrieben werden.

Die Zugfestigkeit dieses thermoplastischen Polymeren beträgt bevorzugt mindestens 5 MPa, besonders bevorzugt mindestens 10 MPa, gemessen nach DIN 53 455. Die Zugfestigkeit kann je nach Art der Polymeren bis zu 1000 MPa, bevorzugt bis zu 500 MPa und insbesondere bevorzugt bis zu 300 MPa betragen. Der Polymerisationsgrad kann z.B. 5 bis 10000, bevorzugt 10 bis 5000 und insbesondere bevorzugt 10 bis 1000 betragen.

Das Verhältnis von freien Alkoholgruppen zu sulfatierten Alkoholgruppen

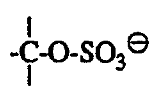

im thermoplastischen Polymer kann z.B. von 50:1 bis 1:50, bevorzugt 10: 1 bis 1:10 betragen.

Die sulfatierten Alkoholgruppen können als sekundäre Gruppen

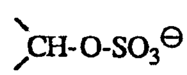

oder tertiäre Gruppen

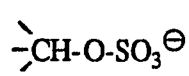

im Polymerrückgrat, oder in Seitengruppen des Polymeren als primäre Gruppen $-CH_2-O-SO_3^{\ominus}$ endständig,

oder als sekundäre Gruppen

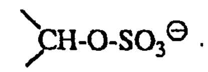

oder als tertiäre Gruppen

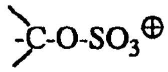

mittelständig gebunden sein.

Den thermoplastischen Polymeren können unterschiedliche Hydroxylgruppen enthaltende Polymere oder Mischungen davon zu Grunde liegen, z.B. Polyester, Polyesteramide, Polyurethane, Polyamide, Polycarbonate und Polyimide aus Hydroxylgruppen enthaltenden Monomeren, verseifte Polymerisate von Vinylestern oder -ethern, hydroxylierte Polydiolefine wie z.B. Polybutadien, Polyisopren oder Chloropren, Polyacrylate oder Polymethacrylate mit Hydroxyalkylresten in der Estergruppe, Polysiloxane mit Hydroxyalkylgruppen oder reduzierte Polyketone oder Copolymere davon; sowie Copolymerisate von Vinylalkohol, Acrylaten oder Methacrylaten oder Dioloefinen mit Comonomeren wie z.B. Acrylnitril, Olefinen, Diolefinen, Vinylchlorid, Vinylidenchlorid, Vinylfluorid, Vinylidenfluorid, Styrol, α-Methylstyrol, Maleinsäureanhydrid, Maleinsäureimid, Vinylethern und Vinylestern.

Den sulfatierten thermoplastischen Polymeren liegen bevorzugt Polymere aus der Gruppe Polyaddukte aus Glycidylverbindungen mit durchschnittlich mehr als einer Epoxidgruppe und einem Diol; Homo- und Copolymere von Hydroxyalkylacrylaten beziehungsweise -methacrylaten; Homo- und Copolymere von Butadien, Isopren und Chloropren, deren Doppelbindungen teilweise hydroxyliert sind; Polyimide aus hydrierten Ketotetracarbonsäuren, besonders Benzophenontetracarbonsäuren; Hydroxyalkylpolysiloxane; und Polyester, Polyamide, Polyurethane und Polyimide aus $C_4$-$C_{12}$-Alkenylendiolen beziehungsweise -diaminen, deren Doppelbindung hydroxyliert ist, zu Grunde.

Bei dem thermoplastischen Polymer kann es sich z.B. um ein mindestens teilweise sulfatiertes Polyaddukt aus a) einer Glycidylverbindung mit durchschnittlich mehr als einer Epoxidgruppe und b) einem Diol handeln, das

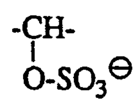

Gruppen in der Polymerkette enthält.

Den Polyaddukten liegen bevorzugt Glycidylverbindungen mit durchschnittlich zwei Epoxidgruppen im Molekül zu Grunde.

Als Glycidylverbindungen kommen vor allem solche mit zwei an ein Heteroatom (z.B. Schwefel, vorzugsweise Sauerstoff oder Stickstoff) gebundenen Glycidylgruppen, β-Methylglycidylgruppen oder 2,3-Epoxycyclopentylgruppen in Frage; genannt seien insbesondere Bis-(2,3-epoxycyclopentyl)-ether; Diglycidylether von mehrwertigen aliphatischen Alkoholen, wie 1,4-Butandiol, oder Polyalkylenglykolen, wie Polypropylenglykole; Diglycidylether von cycloaliphatischen Polyolen, wie 2,2-Bis-(4-hydroxycyclohexyl)-propan; Diglycidylether von mehrwertigen Phenolen, wie Resorcin, Bis-(p-hydroxyphenyl)-methan, 2,2-Bis-(p-hydroxyphenyl)-propan (=Diomethan), 2,2-Bis-(4'-hydroxy-3',5'-dibromphenyl)-propan, 1,3-Di-(p-hydroxyphenyl)-ethan; Di-(β-methylglycidyl)-ether der oben angeführten zweiwertigen Alkohole oder zweiwertigen Phenole; Diglycidylester von Dicarbonsäuren, wie Phthalsäure, Terephthalsäure, $\Delta_4$-Tetrahydrophthalsäure und Hexahydrophthalsäure; N,N-Diglycidylderivate von primären Aminen und Amiden und heterocyclischen, zwei N-Atome enthaltenden Stickstoffbasen, und N,N'-Diglycidylderivate von disekundären Diamiden und Diaminen, wie N,N-Diglycidylanilin, N,N-Diglycidyltoluidin, N,N-Diglycidyl-p-aminophenyl-methyl-ether, N,N'-Dimethyl-N,N'-diglycidyl-bis-(p-aminophenyl)-methan; N',N''-Diglycidyl-N-phenyl-isocyanurat; N,N'-Diglycidylethylenharnstoff; N,N'-Diglycidyl-5,5-dimethyl-hydantoin, N,N'-Diglycidyl-5-isopropyl-hydantoin, N,N-Methylen-bis-(N',N'-diglycidyl-5,5-dimethylhydantoin), 1,3-Bis-(N-glycidyl-5,5-dimethylhydantoin)-2-hydroxypropan; N,N'-Diglycidyl-5,5-dimethyl-6-isopropyl-5,6-dihydro-uracil.

Die Glycidylverbindungen können mit aliphatischen, cycloaliphatischen oder aromatischen Diolen zu den bevorzugten Polyaddukten umgesetzt werden, wobei durch Addition an der Glycidylgruppe eine sekundäre Alkoholgruppe gebildet wird, die sulfatiert werden kann.

Die Glycidylverbindungen können aber auch mit primären, aliphatischen, cycloaliphatischen oder aromatischen Monoaminen (z.B. Anilin, Toluidin, $C_1$-$C_{12}$-Alkylaminen, $C_2$-$C_{12}$-Hydroxyalkylaminen), aliphatischen, cycloaliphatischen oder aromatischen Dicarbonsäuren (z.B. Maleinsäure, Adipinsäure, Trimethyladipinsäure, Sebacinsäure, Azelainsäure, Bernsteinsäure, Dodecylbernsteinsäure, Phthalsäure, Terephthalsäure, $\Delta_4$-Tetrahydrophthalsäure, Hexahydrophthalsäure, 4-Methylhexahydrophthalsäure, 3,6-Endomethylen-$\Delta_4$-tetrahydrophthalsäure, 4-Methyl-3,6-endomethylen-$\Delta_4$-tetrahydrophthalsäure) oder aliphatischen, cycloaliphatischen, heterocyclischen oder aromatischen Bissekundäraminen oder Bissekundärcarbonsäureamiden (z.B. N,N'-Dimethylethylendiamin, N,N'-Dimethylpropylen-1,3-diamin, N,N'-Dimethylhexamethylendiamin, N,N'-Dicyclohexylhexamethylendiamin, N,N',N''-Trimethyldiethylentriämin, N,N'-Diethylpropylen-1,3-diamin, N-Methyl-3,5,5-trimethyl-3-(methylaminomethyl)-cyclohexylamin, N,N'-dimethylierte oder -diethylierte aromatische Diamine, z.B. m- oder p-Phenylendiamin, Bis-(4-aminophenyl)methan oder -sulfon, 2,2-Bis-(4-aminophenyl)-propan, N,N-Dimethyl-m-xylylendiamin, sowie Ethylenharnstoff, 5,5-Dimethylhydantoin, 5-Isopropylhydantoin, N,N-Methylen-bis-5,5-dimethylhydantoin, 1,3-Bis-(5,5-dimethyl)-2-hydroxypropan, 5,5-Dimethyl-6-isopropyl-5,6-dihydrouracil), durch Polyaddition zu linearen Polyaddukten umgesetzt werden.

Bevorzugt ist eine erfindungsgemässe Pressmasse, worin das Polyaddukt

a) 100 bis 5 Mol-% gleiche oder verschiedene Struktureinheiten der Formel I

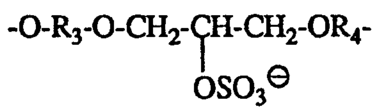

(I)

und

b) 95 bis 0 Mol-% gleiche oder verschiedene Struktureinheiten der Formel II

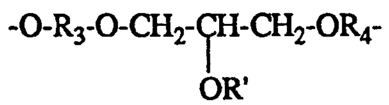

(II)

enthält, bezogen auf das Polyaddukt, wobei $R_3$ und $R_4$ unabhängig voneinander den um zwei Hydroxylgruppen verminderten Rest eines Diols mit aliphatischen oder aromatischen Diolgruppen darstellen, und R'H, $C_1$-$C_{20}$-Alkyl, $C_1$-$C_{20}$-Acyl oder mit einem $C_1$-$C_{20}$-Kohlenwasserstoffrest N-substituiertes Aminocarbonyl bedeutet.

Bevorzugt sind 90 bis 20, besonders bevorzugt 30 bis 80 Mol% Struktureinheiten der Formel I, und 80 bis 10, besonders bevorzugt 70 bis 20 Mol% Struktureinheiten der Formel II enthalten.

In einer bevorzugten Ausführungsform stellen $R_3$ und $R_4$ gleiche Reste dar. $R_3$ und $R_4$ in der Bedeutung als Rest mit aliphatischen Diolgruppen enthält bevorzugt 2 bis 12, besonders 2 bis 8 C-Atome. Die Hydroxylgruppen können an offenkettige oder cyclische aliphatische Reste gebunden sein. Als aliphatischer Rest kommt z.B. lineares oder verzweigtes $C_2$-$C_{12}$-Alkylen, $C_3$-$C_8$-Cycloalkylen, $C_1$-$C_4$-Alkyl-$C_5$-$C_8$-cycloalkylen, Cyclohexylmethylen oder Cyclohexyldimethylen in Frage. Beispiele sind Ethylen, 1,2- oder 1,3-Propylen, 1,2-, 1,3- oder 1,4-Butylen, 1,2-, 1,3-, 1,4- oder 1,5-Pentylen, 1,2-, 1,3-, 1,4-, 1,5 oder 1,6-Hexylen, Heptylen, Octylen, Nonylen, Decylen, Undecylen, Dodecylen, 1,3-Cyclopentylen, 1,3- oder 1,4-Cyclohexylen, 2-Methyl- 1,4-cyclohexylen und Cyclohexyl- 1,4-dimethylen.

Die aromatischen Diolgruppen der für die Polyaddukte verwendeten Diole sind insbesondere phenolische Gruppen. Die Diolreste mit phenolischen Gruppen enthalten bevorzugt 6-30, besonders bevorzugt 6-20 C-Atome. Eine bevorzugte Ausführungsform sind Zusammensetzungen, worin $R_3$ und $R_4$ unabhängig voneinander einen Rest der Formel III

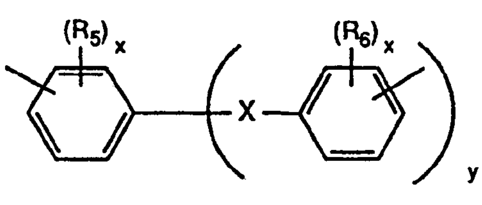

(III)

darstellen, worin X eine direkten Bindung, $C_1$-$C_4$-Alkylen, $C_2$-$C_{12}$-Alkyliden, $C_5$-$C_8$-Cycloalkyliden, -O-, -S-, -SO-, $-SO_2-$, -CO-, $-CO_2-$, -N($C_1$-$C_4$-Alkyl)- oder $-Si(CH_3)_2-$bedeutet, $R_5$ und $R_6$ unabhängig voneinander H, Halogen, $C_1$-$C_4$-Alkyl oder $C_1$-$C_4$-Alkoxy sind, und x 1 oder 2 bedeutet und y für 0 oder 1 steht.

X stellt bevorzugt eine direkte Bindung, Methylen, Ethylen, $C_2$-$C_6$-Alkyliden, Cyclohexyliden oder Cyclopentyliden, -O- oder -S- dar. $R_5$ und $R_6$ stehen vorzugsweise für H oder Methyl und y steht bevorzugt für 1.

Insbesondere bedeuten $R_3$ und $R_4$ den Rest

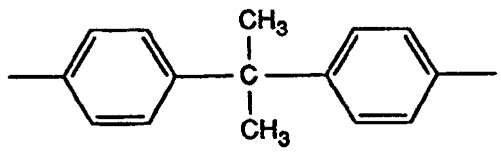 .

Bevorzugt ist auch eine erfindungsgemässe Pressmasse, worin das thermoplastische Polymer ein mindestens teilweise sulfatiertes Homo- oder Copolymer von Acrylaten oder Methacrylaten mit einer Gruppe

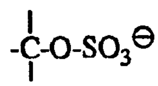

in der Estergruppe ist. Bevorzugter ist eine solche Zusammensetzung, worin das Polymer

a) 100 bis 5 Mol% gleiche oder verschiedene Struktureinheiten der Formel IV

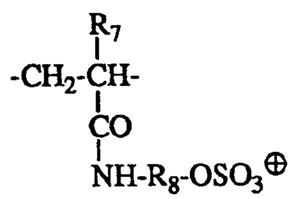 (IV)

und

b) 95 bis 0 Mol% gleiche oder verschiedene Struktureinheiten der Formel V

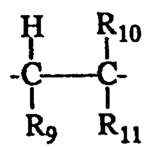 (V)

enthalten, bezogen auf das Polymer, worin $R_7$ H oder Methyl bedeutet, $R_8$ für lineares oder verzweigtes $C_2$-$C_{18}$-Alkylen, Poly($C_2$-$C_6$-oxaalkylen) mit 2 bis 6 Oxaalkyleneinheiten, $C_5$-$C_8$-Cycloalkylen, Phenylen, Benzylen oder Xylylen oder die

Gruppe $-CH_2-\overset{|}{C}H-CH_2-Y-R_{12}$ steht, Y -O-, $-O-\overset{O}{\overset{\|}{C}}-$ oder $-N(C_1\text{-}C_4\text{-Alkyl})-$ bedeutet, und

$R_{12}$ $C_1$-$C_{18}$-Alkyl, $C_5$-$C_7$-Cycloalkyl, ($C_1$-$C_{12}$-Alkyl)-$C_5$-$C_7$-cycloalkyl, Phenyl, ($C_1$-$C_{12}$-Alkyl)phenyl, Benzyl oder ($C_1$-$C_{12}$-Alkyl)benzyl darstellt, $R_9$ für H, $C_1$-$C_6$-Alkyl, $-COOR_{12}$ oder $-COO^{\ominus}$ steht, $R_{10}$ H, F, Cl, CN oder $C_1$-$C_6$-Alkyl bedeutet, und $R_{11}$ H, F, Cl, CN, $R_{12}$-O-, $C_1$-$C_{12}$-Alkyl, $-COO^{\ominus}$, $-COOR_{12}$, $-COAR_8-OH$, $-OCO-R_{12}$ oder Phenyl darstellt, wobei $R_8$ und $R_{12}$ die zuvor angegebenen Bedeutungen haben, und A für -O-oder -NH- steht. A bedeutet bevorzugt -NH-.

Bevorzugt sind 90 bis 20, besonders bevorzugt 80 bis 30 Mol% Struktureinheiten der Formel IV und 80 bis 10, besonders bevorzugt 70 bis 20 Mol% Struktureinheiten der Formel V enthalten.

$R_8$ enthält als Alkylen bevorzugt 2 bis 12, besonders bevorzugt 2 bis 8, und insbesondere bevorzugt 2 bis 6 C-Atome. Beispiele sind Ethylen und die Isomeren von Propylen, Butylen, Pentylen, Hexylen, Heptylen, Octylen, Nonylen, Decylen, Undecylen, Dodecylen, Tetradecylen, Hexadecylen und Octadecylen. Bevorzugt sind Ethylen, 1,2- und 1,3-Propylen, 1,2-, 1,3- und 1,4-Butylen, 1,2-, 1,3-, 1,4- und 1,5-Pentylen und 1,2-, 1,3-, 1,4-, 1,5- und 1,6-Hexylen.

$R_8$ in der Bedeutung von Poly(oxaalkylen) enthält bevorzugt 2 bis 4 Oxaalkyleneinheiten, und bevorzugt 2 bis 4, besonders bevorzugt 2 oder 3 C-Atome im Alkylenrest.

$R_8$ in der Bedeutung von Cycloalkylen stellt insbesondere Cyclopentylen oder Cyclohexylen dar.

Wenn $R_8$ die Gruppe

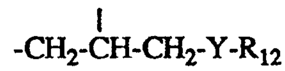

darstellt, so handelt es sich um Umsetzungsprodukte von Poly- oder Copoly(meth)acrylsäureglycidylestern mit einer H-aktiven Verbindung $R_{12}$-Y-H.

Y steht bevorzugt für -O- oder

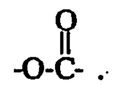

$R_{12}$ kann lineares oder verzweigtes $C_1$-$C_{18}$-, bevorzugt $C_1$-$C_{12}$- und besonders $C_1$-$C_6$-Alkyl sein. $R_{12}$ stellt als Cycloalkyl besonders Cyclopentyl oder Cyclohexyl dar. Bei $R_{12}$ als ($C_1$-$C_{12}$-Alkyl)-cycloalkyl ist das Cycloalkyl besonders Cyclopentyl oder Cyclohexyl und die Alkylgruppe kann linear oder verzweigt sein und enthält bevorzugt 1 bis 6, besonders 1 bis 4 C-Atome. Bedeutet $R_{12}$ Alkylphenyl oder Alkylbenzyl, so kann die Alkylgruppe linear oder verzweigt sein und enthält bevorzugt 1 bis 6, besonders 1 bis 4 C-Atome.

$R_9$ steht bevorzugt für H. Bedeutet $R_9$ Alkyl, so handelt es sich bevorzugt um Methyl oder Ethyl. Bedeutet $R_9$ -COOR$_{12}$, so stellt $R_{12}$ bevorzugt $C_1$-$C_{12}$-, besonders $C_1$-$C_6$-Alkyl dar.

Bedeutet $R_{10}$ Alkyl, so handelt es sich bevorzugt um $C_1$-$C_4$-Alkyl, z.B. Methyl, Ethyl, n-Propyl und n-Butyl. $R_{10}$ steht bevorzugt für H, Cl oder $C_1$-$C_4$-Alkyl.

Bedeutet $R_{11}$ die Gruppe $R_{12}$-O-, so stellt $R_{12}$ bevorzugt $C_1$-$C_{12}$-, besonders $C_1$-$C_6$-Alkyl dar. Bedeutet $R_{11}$ Alkyl, so enthält es bevorzugt 1 bis 6, besonders 1 bis 4 C-Atome. Bedeutet $R_{11}$ die Gruppe -COOR$_{12}$, so stellt $R_{12}$ bevorzugt $C_1$-$C_{12}$-, besonders $C_1$-$C_6$-Alkyl, Cyclopentyl oder Cyclohexyl dar. Bedeutet $R_{11}$ die Gruppe -OCO-$R_{12}$, so stellt $R_{12}$ bevorzugt $C_1$-$C_{12}$-, besonders $C_1$-$C_6$-Alkyl, Phenyl oder Benzyl dar.

In der Gruppe -COOR$_8$OH für $R_{11}$ gelten die zuvor für $R_8$ angegebenen Bevorzugungen.

In einer bevorzugten Ausführungsform stehen $R_9$ für H, $R_{10}$ für H, F, Cl, Methyl oder Ethyl, und $R_{11}$ für F, Cl, CN, $C_1$-$C_4$-Alkyl, $C_1$-$C_6$-Alkoxy, -COO-$C_1$-$C_6$-Alkyl, -COO-$R_8$-OH, -OOC-$C_1$-$C_6$-Alkyl oder Phenyl.

R' in der Bedeutung von $C_1$-$C_{20}$-Alkyl kann linear oder verzweigt sein. R' in der Bedeutung von Acyl kann z.B. $C_1$-$C_{20}$-Alkyl-CO-, $C_5$-$C_8$-Cycloalkyl-CO-, $C_1$-$C_{15}$-Alkyl-$C_5$-$C_8$-cycloalkyl-CO, $C_5$-$C_8$-Cycloalkyl-$CH_2$-CO-, $C_1$-$C_{14}$-Alkyl-$C_5$-$C_8$-cycloalkyl-$CH_2$-CO, Phenyl-CO, Benzyl-CO, $C_1$-$C_{14}$-Alkylphenyl-CO- oder -benzyl-CO- sein. Bei dem Kohlenwasserstoffrest im Aminocarbonyl kann es sich z.B. um $C_1$-$C_{20}$-Alkyl-, $C_5$-$C_8$-Cycloalkyl-, $C_1$-$C_{15}$-Alkyl-$C_5$-$C_8$-cycloalkyl-, $C_5$-$C_8$-Cycloalkyl-$CH_2$-, $C_1$-$C_{14}$-Alkyl-$C_5$-$C_8$-cycloalkyl-$CH_2$-, Phenyl-, Benzyl-, $C_1$-$C_{14}$-Alkylphenyl- oder -benzylhandeln. R' steht bevorzugt für H.

Besonders bevorzugt sind Pressmassen, worin in Formel IV $R_7$ für H oder $CH_3$ und $R_8$ für lineares oder verzweigtes $C_2$-$C_6$-Alkylen, Cyclopentylen oder Cyclohexylen stehen, und in Formel V $R_9$ H bedeutet, $R_{10}$ H oder Methyl darstellt, und $R_{11}$ -COOR$_{12}$ oder -COOR$_8$OH bedeutet.

Eine weitere bevorzugte Ausführungsform sind Pressmassen, worin das thermoplastische Polymer ein mindestens teilweise sulfatierter Polyvinylalkohol oder sulfatiertes Polyvinylalkohol-Copolymer mit Gruppen

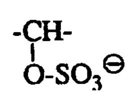

ist. Sulfatierte Polyvinylalkohol-Copolymere sind bevorzugt in der Zusammensetzung enthalten.

Bevorzugt sind solche Zusammensetzungen, worin das Copolymer

a) 90 bis 5 Mol% Struktureinheiten der Formel VI

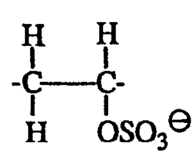

(VI),

und

b) 95 bis 10 Mol% gleiche oder verschiedene Struktureinheiten der Formel V

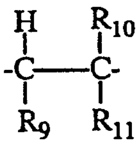

(V),

enthält, worin $R_9$, $R_{10}$ und $R_{11}$ die zuvor angegebenen Bedeutungen haben.

Bevorzugt sind 70 bis 10, besonders 60 bis 20 Mol% Struktureinheiten der Formel VI, und 30 bis 90, besonders 40 bis 80 Mol% Strukturelemente der Formel V enthalten.

Für die Bedeutungen von $R_9$, $R_{10}$ und $R_{11}$ in Formel V gelten die zuvor angegebenen Bevorzugungen.

Insbesondere sind solche Pressmassen bevorzugt, worin $R_9$ und $R_{10}$ H sind und $R_{11}$ $-OCOR_{12}$ darstellt, worin $R_{12}$ $C_1$-$C_{18}$-Alkyl, $C_5$-$C_7$-Cycloalkyl, ($C_1$-$C_{12}$-Alkyl)-$C_5$-$C_7$-cycloalkyl, Phenyl, Benzyl, ($C_1$-$C_{12}$-Alkyl)phenyl oder ($C_1$-$C_{12}$-Alkyl)benzyl darstellt.

Eine bevorzugte Ausführungsform sind Pressmassen worin das thermoplastische Polymere ein sulfatiertes Polyimid mit Strukturelementen der Formel VII

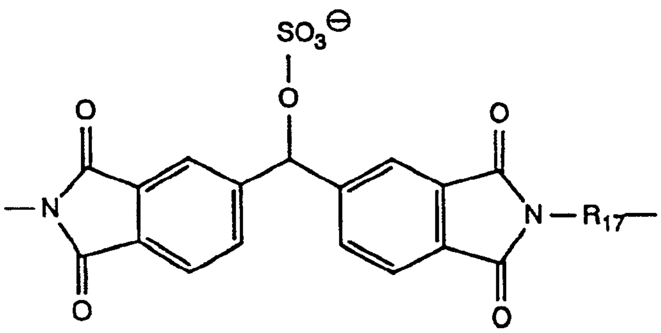

(VII)

darstellt, worin $R_{17}$ für unsubstituiertes oder mit $C_1$-$C_6$-Alkyl oder $C_1$-$C_6$-Alkoxy substituiertes $C_6$-$C_{12}$-Arylen oder $C_5$-$C_8$-Cycloalkylen oder für den Rest

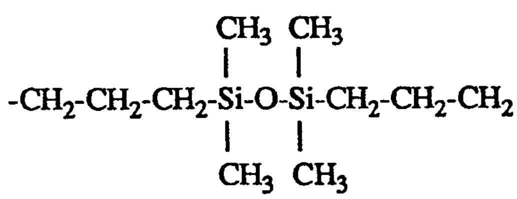

steht.

Eine andere bevorzugte Ausführungsform sind Pressmassen worin das thermoplastische Polymere ein sulfatiertes Polyamid mit Strukturelementen der Formel VIII

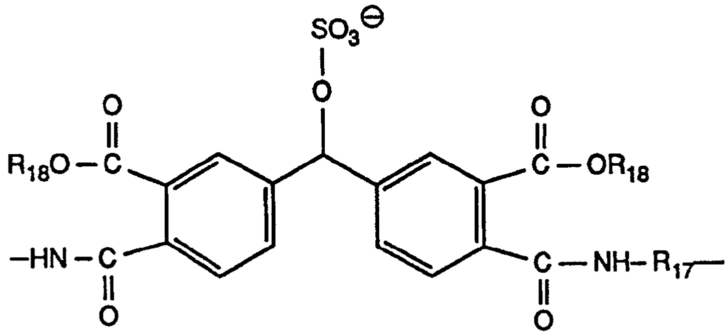

(VIII)

darstellt, worin

$R_{17}$ für unsubstituiertes oder mit $C_1$-$C_6$-Alkyl oder $C_1$-$C_6$-Alkoxy substituiertes $C_6$-$C_{12}$-Arylen oder $C_5$-$C_8$-

Cycloalkylen oder für den Rest

$$-CH_2-CH_2-CH_2-\overset{\overset{\large CH_3}{|}}{\underset{\underset{\large CH_3}{|}}{Si}}-O-\overset{\overset{\large CH_3}{|}}{\underset{\underset{\large CH_3}{|}}{Si}}-CH_2-CH_2-CH_2 \quad \text{steht und}$$

$R_{18}$ $C_1$-$C_{12}$Alkyl bedeutet.

Eine weitere bevorzugte Ausführungsform sind Pressmassen worin das thermoplastische Polymer ein sulfatiertes Polymer eines teilhydroxylierten Polybutadien oder Polyisoprens ist.

Enthält die Pressmasse mehr als ein Polyanion eines thermoplastischen Polymeren mit sulfatierten Alkoholgruppen, so sind binäre oder ternäre Mischungen bevorzugt.

Die Polyanionen der Komponente b) in der erfindungsgemässen Pressmasse leiten sich von bekannten oder nach an sich bekannten Verfahren herstellbaren polymeren Salzen ab.

Es handelt sich um thermoplastische Polymere mit sulfatierten Alkhoholgruppen

$$-\overset{|}{\underset{|}{C}}-O-SO_3^{\ominus}M^{\oplus}$$

in wiederkehrenden Struktureinheiten, wobei $M^{\oplus}$ für ein Alkalimetall-oder Ammoniumkation steht. Solche Polymere sind zum Beispiel in der EP-A-0 358 188 beschrieben.

Das Ammoniumkation kann z.B. $NH_4^{\oplus}$, ein protoniertes, primäres, sekundäres oder tertiäres Amin, oder quaternäres Ammonium oder Pyridinium sein. Das primäre Ammonium kann 1 bis 18 C-Atome, besonders 1 bis 12 und insbesondere 1 bis 6 C-Atome, das sekundäre Ammonium 2 bis 24, besonders 2 bis 12, insbesondere 2 bis 8 C-Atome, das tertiäre Ammonium 3 bis 30, besonders 3 bis 18 und insbesondere 3 bis 12 C-Atome, und das quaternäre Ammonium 4 bis 36, besonders 4 bis 24 und insbesondere 4 bis 18 C-Atome enthalten.

Bevorzugte polymere Salze sind solche, worin $M^{\oplus}$ $Li^{\oplus}$, $Na^{\oplus}$ oder $K^{\oplus}$ darstellt, oder $R_{13}R_{14}R_{15}R_{16}N^{\oplus}$ ist, worin $R_{13}$, $R_{14}$, $R_{15}$ und $R_{16}$ unabgängig voneinander H, unsubstituiertes oder Hydroxyl-substituiertes $C_1$-$C_{18}$-Alkyl, Phenyl, ($C_1$-$C_{12}$-Alkyl)phenyl, ($C_1$-$C_{12}$-Alkyl)benzyl, $C_5$-$C_7$-Cycloalkyl, ($C_1$-$C_{12}$-Alkyl)-$C_5$-$C_7$-cycloalkyl darstellen, oder $R_{13}$ und $R_{14}$ zusammen Tetramethylen, Pentamethylen oder 3-Oxapentylen sind und $R_{15}$ und $R_{16}$ die zuvor angegebenen Bedeutungen haben. Eine bevorzugte Ausführungsform sind Polymere, worin mindestens eines von $R_{13}$ bis $R_{16}$ nicht H bedeutet.

$R_{13}$ bis $R_{16}$ können in der Bedeutung von Alkyl linear oder verzweigt sein und bevorzugt 1 bis 12, besonders 1 bis 6 C-Atome enthalten. Beispiele sind Methyl, Ethyl, n- und i-Propyl, n-, i- und t-Butyl, Pentyl, Hexyl, Heptyl, Octyl, Nonyl, Decyl, Undecyl, Dodecyl, Tetradecyl, Hexadecyl und Octadecyl.

$R_{13}$ bis $R_{16}$ in der Bedeutung von Hydroxyalkyl kann linear oder verzweigt sein und enthält bevorzugt 2 bis 18, besonders 2 bis 12 und insbesondere 2 bis 6 C-Atome. Einige Beispiele sind 2-Hydroxyeth-1-yl, 1- oder 2-Hydroxy-prop-3-yl, 1-Hydroxybut-4-yl, 1-Hydroxyhex-6-yl.

Beispiele für Alkylphenyl und Alkylbenzyl sind Methylphenyl, Dimethylphenyl, Ethylphenyl, n- oder i-Propylphenyl, n-, i- oder t-Butylphenyl, Hexylphenyl, Octylphenyl, Decylphenyl, Dodecylphenyl und entsprechend alkylierte Benzylreste.

$R_{13}$ bis $R_{16}$ in der Bedeutung von Cycloalkyl stellen besonders Cyclopentyl oder Cyclohexyl dar.

$R_{13}$ bis $R_{16}$ in der Bedeutung von Alkylcycloalkyl ist bevorzugt ($C_1$-$C_{12}$-Alkyl)cyclopentyl oder -cyclohexyl, z.B. Methyl- oder Ethylcyclopentyl oder -cyclohexyl.

Besonders bevorzugt stehen $R_{13}$ bis $R_{16}$ für $C_1$-$C_6$-Alkyl.

Die erfindungsgemäss zu verwendenden polymeren Salze sind bekannt oder können nach allgemein bekannten Verfahren hergestellt werden, wobei je nach Art der verwendeten Polymeren und der Verfahrensbedingungen Hydroxylgruppen in den verwendeten Monomeren mit üblichen Schutzgruppen geschützt werden.

Polymere Salze mit Gruppen

$$\underset{\underset{\large O-SO_3^{\ominus}M^{\oplus}}{|}}{-CH-}$$

in der Polymerkette aus einem mindestens teilweise sulfatierten Polyaddukt aus a) einer Glycidylverbindung mit durchschnittlich mehr als einer, bevorzugt zwei, Epoxidgruppe und b) einem Diol werden bevorzugt. Solche polymeren Salze sind z.B. in der US-A-3 402 221 beschrieben.

Polymere Salze aus einem mindestens teilweise sulfatierten Homo- oder Copolymer von Acrylaten oder Methacrylaten mit einer Gruppe

$$-\overset{|}{\underset{|}{C}}-O-SO_3^{\ominus}M^{\oplus}$$

in der Estergruppe sind z.B. in den US-A-4 341 647 und US A 4 288 427 beschrieben.

Polysiloxane mit sulfatierten und versalzten Hydroxyalkylgruppen sind z.B. in der JP-A- 180690 beschrieben.

Polyimide und Polyamide mit Hydroxylgruppen sind z.B. aus Ketotetracarbonsäuren bzw. -dicarbonsäuren durch Hydrierung der Ketogruppe vor der Polyimidbildung erhältlich. So kann z.B. Benzophenon-3,4-carbonsäuredianhydrid in Benzhydroltetracarbonsäuredianhydrid beziehungsweise deren Säuren oder Ester übergeführt werden.

Zur Herstellung erfindungsgemäss zu verwendender sulfatierte Hydroxylgruppen enthaltende Polyester, Polyamide, Polyimide und Polyurethane können zunächst entsprechende ungesättigte Polymere aus ungesättigten Monomeren, z.B. aus ungesättigten Dicarbonsäuren wie z.B. Malein- oder Fumarsäure, oder Alkenylendiolen oder Alkenylendiaminen hergestellt werden, z.B. aus 1,4-But-2-en-diol oder -diamin. Die Doppelbindungen in den Polymeren können dann wie auch im Polybutadien, Polyisopren oder Chloropren, mit Persäuren epoxidiert und anschliessend der Epoxidring z.B. durch Hydrolyse geöffnet werden. Die Hydroxylgruppen können dann sulfatiert werden, was auch für die bekannten Polyvinylalkohole und Polyvinylalkohol-Copolymere gilt (siehe z.B. M.L. Hallensleben in Houben-Weyl, Band E20, Seite 1994ff.)

Hydroxyalkylgruppen enthaltende Polymere können auch dadurch gewonnen werden, dass Polymere mit aktiven H-Atomen, wie z.B. Polyvinylalkohol, Polyamide, Acryl/Methacrylsäure-polymere oder Copolymere davon, mit Ethylenoxid oder Propylenoxid umgesetzt werden.

Die erfindungsgemäss zu verwendenden thermoplastischen polymeren Salze sind in bekannter Weise erhältlich, indem man in einem inerten Lösungsmittel ein thermoplastisches Polymer, das in wiederkehrenden Struktureinheiten Alkoholgruppen

$$-\overset{|}{\underset{|}{C}}-OH$$

enthält, mit $SO_3$ umsetzt, danach die Reaktionsmischung mit einer Alkalimetall- oder Ammoniumbase neutralisiert und das Polymere isoliert.

Das Verfahren ist an sich bekannt. Das $SO_3$ kann z.B. als Gas in die Reaktionslösung eingeleitet werden. Bevorzugt wird ein Pyridin/$SO_3$-Komplex verwendet, der kommerziell erhältlich ist.

Geeignete inerte Lösungsmittel sind besonders polare aprotische Lösungsmittel, wobei sich die Wahl des Lösungsmittels hauptsächlich nach der Löslichkeit der Hydroxylgruppen enthaltenden Polymeren richtet. Die Lösungsmittel können alleine oder in Mischung aus mindestens 2 Lösungsmitteln verwendet werden. Beispiele sind: Ether wie Dibutylether, Tetrahydrofuran, Dioxan, Methylenglykol, Dimethylethylenglykol, Dimethyldiethylenglykol, Diethyldiethylenglykol, Dimethyltriethylenglykol, halogenierte Kohlenwasserstoffe wie Methylenchlorid, Chloroform, 1,2-Dichlorethan, 1,1,1-Trichlorethan, 1,1,2,2-Tetrachlorethan, und Lactone wie γ-Butyrolacton, δ-Valerolacton und Pivalolacton, Carbonsäureamide und Lactame wie N,N-Dimethylformamid, N,N-Diethylformamid, N,N-Dimethylacetamid, N,N-Diethylacetamid, N-Methyl-γ-butyrolactam, N-Methyl-ε-caprolactam, N-Methylpyrrolidon, N-Acetylpyrrolidon, Tetramethylharnstoff, Hexamethylphosphorsäuretriamid, Sulfoxide wie Dimethylsulfoxid, Sulfone wie Dimethylsulfon, Diethylsulfon, Trimethylensulfon, Tetramethylensulfon, N-Methylpyrrolidin, N-Methylpiperidin, N-Methylmorpholin, substituierte Benzole wie Benzonitril, Chlorbenzol, o-Dichlorbenzol, 1,2,4-Trichlorbenzol, Nitrobenzol.

Die Reaktionstemperatur beträgt z.B. 10 bis 150°C, vorzugsweise 20 bis 100°C. Die Reaktionszeit beträgt etwa 5 bis 10 Stunden. Nach Beendigung der Reaktion wird bei Verwendung von $SO_3$-Gas mit einer wässrigen Lösung von Alkalimetallbasen oder Ammoniumhydroxid, oder wässrigen oder organischen Lösungen von Aminhydroxiden neutralisiert. Bei Verwendung von Amin/$SO_3$-Komplexen, z.B. einem Pyridin/$SO_3$-Komplex, werden die entsprechenden Ammoniumsalze gebildet, die direkt verwendet oder in denen die Ammoniumgruppen mit stärkeren Basen ersetzt werden können. Die Salze der sulfatierten Polymeren werden im allgemeinen mit

Wasser ausgefällt. Das Polymer wird dann abfiltriert und kann zur Reinigung mit Wasser oder einem organischen Nichtlösungsmittel gewaschen und darauf getrocknet werden.

Polymere Salze von Polyolefinen können auch durch z.B. radikalische Polymerisation von Acrylaten und Methacrylaten mit $-O-SO_3M^{\oplus}$-Resten in der Estergruppe gegebenenfalls zusammen mit Olefin-Comonomeren hergestellt werden.

Die erfindungsgemäss zu verwendenden polymeren Salze von sulfatierten Hydroxylgruppen enthaltenden Polymeren haben thermoplastische Eigenschaften. Ihre Glasumwandlungstemperatur ist im Vergleich zu den Ausgangspolymeren im wesentlichen unverändert und sie zeichnen sich durch ihre mechanische Festigkeit aus, z.B. durch eine hohe Zug- und Biegefestigkeit und hohe Flexibilität. Sie eignen sich hervorragend als Polyanionen für elektrisch leitende Polykationen von Polyheteroaromaten.

Die erfindungsgemässen Pressmassen werden in an sich bekannter Weise hergestellt, indem man

a) in einer organischen, wässrig-organischen oder wässrigen Lösung einen Heteroaromaten oder ein Anilin in Gegenwart eines polymeren Salzes elektrochemisch polymerisiert und danach die Teilchen von der Anode entfernt oder

b) einen Heteroaromaten oder ein Anilin in Gegenwart eines polymeren Salzes und eines inerten Lösungsmittels mit einem Oxidationsmittel umsetzt.

Geeignete Oxidationsmittel sind z.B. Peroxide und Persulfate, besonders $H_2O_2$, $K_2S_2O_8$ und $(NH_4)_2S_2O_8$, sowie Eisen(III)-Verbindungen und Kupfer(II)-Verbindungen, besonders $FeCl_3$ und $CuCl_2$.

Die Elektrolyse kann potentiostatisch oder galvanostatisch durchgeführt werden. Als Anodenmaterial eignen sich z.B. inerte Metalle (Titan, Nickel, Platin, Stahl) oder ITO-Glas, oder auch nicht inerte Metalle wie z.B. Aluminium (siehe DE-A-3 906 563). Die Stromdichte kann z.B. 0,5-50, bevorzugt 2 bis 50 und besonders bevorzugt 2 bis 20 mA/cm$^2$ betragen. Ein geeignetes Anodenmaterial sind auch Bürstenelektroden.

Die Konzentration an polymeren Salzen kann 0,05 bis 1 Mol/l, bevorzugt 0,01 bis 0,5 Mol/l betragen, bezogen auf die Reaktionsmischung. Die Konzentration an Heteroaromaten oder einem Anilin kann 0,01 bis 10 Vol.%, besonders 0,1 bis 5 Vol.% betragen, bezogen auf das Volumen der Reaktionsmischung.

Geeignete organische Lösungsmittel sind zuvor erwähnt worden. Bevorzugte Lösungsmittel sind Alkohole, z.B. Alkanole mit 1 bis 12 C-Atomen, die mit $C_1$-$C_4$-Alkoxy substituiert sein können. Beispiele sind Methanol, Ethanol, n- und i-Propanol, n-, i- und t-Butanol, Pentanol, Hexanol, Heptanol, Octanol, Decanol, Dodecanol, Methoxyethanol, Ethoxyethanol, Diethylenglykolmonomethyl- oder -monoethylether, 1 -Methoxypropan-2-oder -3-ol.

Die Bildung von pulverförmigen Abscheidungen auf der Elektrode kann durch die Elektrolysebedingungen und besonders durch die Wahl des Lösungsmittels bestimmt werden. Die Gegenwart polarer protischer Lösungsmittel alleine oder in Mischung mit polaren Lösungsmitteln fördert die Bildung von Pulvern.

Eine bevorzugte Ausführungsform des Verfahrens ist dadurch gekennzeichnet, dass die Polymerisation in Gegenwart eines polaren protischen Lösungsmittels, bevorzugt in Gegenwart von Alkoholen durchgeführt wird, wobei $M^{\oplus}$ für ein Ammoniumkation mit mindestens einer organischen Gruppe steht. Besonders steht $M^{\oplus}$ hierbei für $R_{13}R_{14}R_{15}R_{16}N^{\oplus}$ worin $R_{13}$ bis $R_{16}$ unabhängig voneinander unsubstituiertes oder Hydroxyl-substituiertes $C_1$-$C_{18}$-Alkyl, Phenyl, ($C_1$-$C_{12}$-Alkyl)phenyl, ($C_1$-$C_{12}$-Alkyl)benzyl, $C_5$-$C_7$-Cycloalkyl, ($C_1$-$C_{12}$-Alkyl)-$C_5$-$C_7$-cycloalkyl darstellen, oder $R_{13}$ und $R_{14}$ zusammen Tetramethylen, Pentamethylen oder 3-Oxapentylen sind und $R_{15}$ und $R_{16}$ die zuvor angegebenen Bedeutungen haben. Insbesondere sind $R_{13}$ bis $R_{16}$ hierbei $C_1$-$C_6$-Alkyl, z.B. Methyl, Ethyl, n-Propyl und bevorzugt n-Butyl.

Die elektrochemische Polymerisation kann bei ausreichender Löslichkeit der Reaktanden auch in Wasser oder wässrig-organischer Lösung durchgeführt werden. Die Mitverwendung von Puffern ist zweckmässig. Geeignete Puffer sind z.B. Alkylammoniumphosphate mit 1 bis 3, besonders 2 oder 3 Alkylresten in der Ammoniumgruppe, die 1 bis 6, besonders 1 bis 4 C-Atome enthalten können. Beispiele sind Trimethyl-, Triethyl-, Tri-n-propyl-und Tri-n-butylammoniumphosphat. Geeignete Puffer sind auch Kationenaustauscher in ihrer protonierten Form.

Der Reaktionsmischung können auch weitere Substanzen zugegeben werden, die sich auf der Anode mitabscheiden, z.B. anionische Weichmacher oder anionische Farbstoffe.

Nach beendeter Elektrolyse können die erfindungsgemässen Pressmassen in Form von pulverigen Abscheidungen von der Anode gelöst und durch Auswaschen mit Lösungsmitteln gereinigt werden. Die Teilchengrössen des Pulvers kann z.B. von 1 bis 5000 µm, bevorzugt von 10 bis 3000 µm betragen. Die Teilchen weisen je nach Elektrolysebedingungen unterschiedliche Gestalt auf. Es kann sich um gegebenenfalls verwachsene Dendrite, Nadeln, Stäbchen, Fasern oder tropfenförmige Teilchen handeln.

Die Oxidation mit Eisen(III)-Verbindungen kann z.B. bei Temperaturen von -20°C bis 60°C, bevorzugt 0°C bis 40°C durchgeführt werden. Geeignete Lösungsmittel sind zuvor bei der Herstellung der polymeren Salze erwähnt worden. Sofern die Eisen(III)-Verbindungen, z.B. Eisensalze, in organischen Lösungsmitteln unlöslich sind, werden zweckmässig wasserlösliche Lösungsmittel in Abmischung mit Wasser eingesetzt. Geeignete

wasserlösliche Lösungsmittel sind insbesondere $C_1$-$C_{12}$-, bevorzugt $C_1$-$C_4$-Alkanole, die mit $C_1$-$C_4$-Alkoxy substituiert sein können. Beispiele für Alkanole sind zuvor erwähnt worden.

Geeignete Eisen(III)-Verbindungen sind z.B. Eisen(III)-Komplexe oder -Komplexsalze oder besonders Eisen(III)-Salze von anorganischen und organischen Säuren, wie z.B. HCl, HBr, HJ, $H_2SO_4$, $HClO_4$, $HNO_3$, $FSO_3H$, $CF_3SO_3H$, Essigsäure und Propionsäure. Bevorzugt sind Eisen(III)-Halogenide, besonders Eisen(III)-chlorid. Neben Fe(III)-Salzen können auch andere Oxidationsmittel, wie Ammoniumperoxodisulfat und Cu(II)-Salze verwendet werden.

Die chemische Oxidationsmethode ist z.B. im Bull. Chem. Soc. Jpn. 62, S. 234-238 (1989) beschrieben. Die Reaktion verläuft schnell und die gewünschten Produkte fallen als schwarze Pulver aus, die abfiltriert werden und durch Auswaschen mit z.B. Wasser, NaOH oder beiden Mitteln gereinigt werden können. Sofern ionisches Chlorid enthalten ist, kann es durch Behandeln der Pulver mit Chlorsulfonsäure und nachfolgendes Waschen mit Wasser entfernt werden.Die Korngrösse der Pulverteilchen beträgt z.B. von 0,1 µm bis 100 µm, bevorzugt von 1 µm bis 10 µm.

Anstelle von Anilin kann bei der chemischen Oxidation auch das entsprechende, gegebenenfalls halboxidierte Polyphenylenamin, z.B. Poly(p-phenylenamin-imin) eingesetzt werden.

Die Pulver weisen bei Verwendung von Eisen(III)-Salzen einen geringen Anionenanteil aus dem Oxidationsmittel auf, selbst bei einem grossen Ueberschuss an Eisen(III)-Salzen im Vergleich zu anionischen Gruppen im Polyelektrolyten. Bei den erfindungsgemässen Pressmassen handelt es sich um schwarze rieselfähige und elektrisch leitende Pulver mit Glasumwandlungstemperaturen bis zu etwa 150°C, aus denen nach bekannten Pressverfahren einschliesslich Spritzpressen unter Ausübung von Druck Formkörper in beliebiger dreidimensionaler Gestalt hergestellt werden können. Ein weiterer Gegenstand der Erfindung ist die Verwendung der erfindungsgemässen Pressmassen zur Herstellung von elektrisch leitenden Formkörpern, z.B. von Stäben, Platten Gehäusen und anderen Formteilen, die zur Abschirmung elektromagnetischer Felder oder als Elektroden eingesetzt werden können.

Die Pressmassen können bei niedrigen Temperaturen zu Sinterkörpern verarbeitet werden, die porös sein können. Bei Anwendung von hohem Druck und höheren Temperaturen, z.B. unterhalb der Zersetzungstemperaturen bis zum Bereich der Glasumwandlungstemperaturen, bevorzugt 60°C bis 150°C, sind die Pressmassen überraschend fliessfähig. Unter solchen Verarbeitungsbedingungen erhält man kompakte Formkörper mit glatten Oberflächen und guten mechanischen Eigenschaften, z.B. Biegefestigkeit, Bruchfestigkeit, Zugfestigkeit, Flexibilität und Zähigkeit.

Die Formkörper aus den erfindungsgemässen Pressmassen weisen hohe elektrische Leitfähigkeiten auf, die bei Polyheteroaromaten im allgemeinen über 0,1 S/cm liegen. Die Leitfähigkeit kann durch Tempern von Presslingen oder durch den Druck und/oder die Temperatur beim Pressverfahren beeinflusst werden. Sie weisen ferner wertvolle mechanische Eigenschaften auf. Ueberraschend wurde gefunden, dass die erfindungsgemässen Pressmassen so niedrige Glasumwandlungstemperaturen besitzen, dass selbst bei einem geringen Polyanionanteil eine Verarbeitung nach einem thermoplastischen Formgebungsverfahren, nämlich Pressverfahren, ohne Verlust der elektrischen Leitfähigkeit möglich ist.

Die Formkörper aus erfindungsgemässen Pressmassen können z.B. als elektrische Leiter, Elektroden, Kathoden für Batterien, elektromagnetische Abschirmungsmaterialien, elektrisch leitende Stäbe, Sensoren, antistatisches Verpackungsmaterial oder elektrisch leitendes Versiegelungsmaterial verwendet werden.

Die pulverförmigen Pressmassen können auch als elektrisch leitende Füllstoffe in Polymere eingearbeitet werden, z.B. in Mengen von 0,1 bis 90, vorzugsweise 5 bis 80 Gew.-%, bezogen auf den Kunststoff. Geeignete Kunststoffe, z.B. aus dem Bereich der Duroplaste, Thermoplaste und strukturell vernetzter Polymere sowie Einarbeitungsmethoden und die Verwendung von z.B. Verarbeitungshilfsmitteln, anderen Füllstoffen, Farbstoffen und Stabilisatoren sind dem Fachmann geläufig. Ein weiterer Gegenstand der Erfindung ist die Verwendung der pulverförmigen Pressmassen als elektrisch leitende Füllstoffe für Kunststoffe. Formkörper aus diesen gefüllten Kunststoffen können je nach Menge des elektrisch leitenden Füllstoffs z.B. als elektrische Leiter oder als Bauteile zur Abschirmung elektrischer und magnetischer Felder verwendet werden.

Ein weiterer Gegenstand der Erfindung ist eine Zusammensetzung aus

a) einem thermoplastischen, duroplastischen oder strukturell vernetzten Polymer, dem

b) ein elektrisch leitender feinteiliger Füllstoff aus a1) mindestens einem Polyheteroaromaten oder einem Anilin in oxidierter, polykationischer Form, und b1) mindestens einem Polyanion eines thermoplastischen Polymeren mit sulfatierten Alkoholgruppen

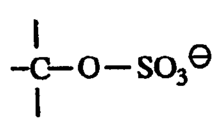

in wiederkehrenden Struktureinheiten einverleibt ist.

Die Menge der Komponente b) kann 0,1 bis 90 Gew.-%, bevorzugt 5 bis 80 Gew.-% betragen, bezogen auf die Komponente a). Bei einer Menge bis zu etwa 20 Gew.-% werden elektrische Leitfähigkeiten erzielt, die z.B. für eine antistatische Ausrüstung und die Abschirmung von elektrischen Feldern geeignet sind. Hohe elektrische Leitfähigkeiten und z.B. als elektrische Leiter geeignete Formkörper werden bei Zusatzmengen von über 20 Gew.-%, bevorzugt mindestens 30 Gew.-% erhalten.

Als Kunststoffe eignen sich z.B.:

1. Polymere von Mono- und Diolefinen, beispielsweise Polypropylen, Polyisobutylen, Polybuten-1, Polymethylpenten-1, Polyisopren oder Polybutadien sowie Polymerisate von Cycloolefinen wie z.B. von Cyclopenten oder Norbornen; ferner Polyethylen (das gegebenenfalls vernetzt sein kann), z.B. Polyethylen hoher Dichte (HDPE), Polyethylen niederer Dichte (LDPE), lineares Polyethylen niederer Dichte (LLDPE).

2. Mischungen der unter 1) genannten Polymeren, z.B. Mischungen von Polypropylen mit Polyisobutylen, Polypropylen mit Polyethylen (z.B. PP/HDPE, PP/LDPE) und Mischungen verschiedener Polyethylentypen (z.B. LDPE/HDPE).

3. Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat- Copolymere, Ethylen-Vinylacetat-Copolymere oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen; ferner Mischungen solcher Copolymere untereinander und mit unter 1) genannten Polymeren, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere und LLDPE/Ethylen-Acrylsäure-Copolymere.

3a. Kohlenwasserstoffharze (z.B. $C_5$-$C_9$) inklusive hydrierte Modifkationen davon (z.B Klebrigmacherharze).

4. Polystyrol, Poly-(p-methylstyrol), Poly-($\alpha$-methylstyrol).

5. Copolymere von Styrol oder $\alpha$-Methylstyrol mit Dienen oder Acrylderivaten, wie z.B. Styrol-Butadien, Styrol-Acrylnitril, Styrol-Alkylmethacrylat, Styrol-Butadien-Alkylacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-Isopren-Styrol, Styrol-Ethylen/Butylen-Styrol oder Styrol-Ethylen/Propylen-Styrol.

6. Pfropfcopolymere von Styrol oder $\alpha$-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 5) genannten Copolymeren, wie sie z.B. als sogenannte ABS-, MBS-, ASA- oder AES-Polymere bekannt sind.

7. Halogenhaltige Polymere, wie z.B. Polychloropren, Chlorkautschuk, chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.

8. Polymere, die sich von $\alpha$,$\beta$-ungesättigten Säuren und deren Derivaten ableiten, wie Polyacrylate und Polymethacrylate, Polyacrylamide und Polyacrylnitrile.

9. Copolymere der unter 8) genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.

10. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit in Punkt 1 genannten Olefinen.

11. Homo- und Copolymere von cyclischen Ethern, wie Polyalkylenglykole, Polyethylenoxyd, Polypropylenoxyd oder deren Copolymere mit Bisglycidylethern.

12. Polyacetale, wie Polyoxymethylen, sowie solche Polyoxymethylene, die Comonomere, wie z.B. Ethylenoxid, enthalten; Polyacetale, die mit thermoplastischen Polyurethanen, Acrylaten oder MBS modifiziert sind.

13. Polyphenylenoxide und -sulfide und deren Mischungen mit Styrolpolymeren oder Polyamiden.

14. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.

15. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, Polyamid 11, Polyamid 12, aromatische Polyamide ausgehend von m-Xylylendiamin und Adipinsäure; Polyamide, hergestellt aus Hexamethylendiamin und Iso- und/oder Terephthalsäure und gegebenenfalls einem Elastomer als Modifikator, z.B. Poly-2,4,4-trimethylhexamethylenterephthalamid, Poly-m-phenylen-isophthalamid. Block-Copolymere der vorstehend genanntenPolyamide mit Polyolefinen, Olefin-Copolymeren, Ionomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

16. Polyharnstoffe, Polyimide, Polyamid-imide und Polybenzimidazole.

17. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethern mit Hydroxylendgruppen ableiten; ferner mit Polycarbonaten oder MBS modifizierte Polyester.

18. Polycarbonate und Polyestercarbonate.

19. Polysulfone, Polyethersulfone und Polyetherketone.

20. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

21. Trocknende und nicht-trocknende Alkydharze.

22. Ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.

23. Vernetzbare Acrylharze, die sich von substituierten Acrylsäureestern ableiten, wie z.B. von Epoxyacrylaten, Urethan-acrylaten oder Polyester-acrylaten.

24. Alkydharze, Polyesterharze und Acrylatharze, die mit Melaminharzen, Harnstoffharzen, Polyisocyanaten oder Epoxidharzen vernetzt sind.

25. Vernetzte Epoxidharze, die sich von Polyepoxiden ableiten, z.B. von Bis-glycidylethern oder von cycloaliphatischen Diepoxiden.

26. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie Methylcellulose; sowie Kolophoniumharze und Derivate.

27. Mischungen (Polyblends) der vorgenannten Polymeren, wie z.B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO.

Der erfindungsgemässen Zusammensetzung können weitere Additive zur Verbesserung der Verarbeitungseigenschaften, der mechanischen, elektrischen und thermischen Eigenschaften, der Oberflächeneigenschaften und der Lichtstabilität einverleibt sein, zum Beispiel feinteilige Füllstoffe, Verstärkerfüllstoffe, Weichmacher, Gleit- und Entformungsmittel, Haftvermittler, Antioxidantien, Wärme- und Lichtstabilisatoren, Pigmente und Farbstoffe.

Die Herstellung der erfindungsgemässen Zusammensetzung kann nach in der Kunststofftechnik bekannten Verfahren erfolgen, zum Beispiel durch Vermischen des feinteiligen elektrisch leitenden Füllstoffs mit dem Kunststoff vor, während oder nach der Herstellung, durch Plastifizieren des Kunststoffs und Vermischen mit dem Füllstoff mittels Kalandrieren, Kneten, Extrudieren oder Spritzgiesen zur Herstellung von Granulaten oder Formkörpern. Es ist auch möglich, Kunststoffpulver mit dem Füllstoff trocken zu vermischen oder den Füllstoff in einer Kunststofflösung zu suspendieren und dann das Lösungsmittel zu entfernen.

Bei Duroplasten und strukturell vernetzten Polymeren wird der feinteilige Füllstoff zweckmässig vor der Formgebung und vor dem Härten bzw. Vernetzen zugesetzt, zum Beispiel durch gemeinsames Vermischen

der Kunststoffkomponenten mit dem Füllstoff, wobei dieser zuvor einer Komponente einverleibt werden kann.

Die erfindungsgemässe Zusammensetzung ist eine wertvolle Formmasse zur Herstellung antistatisch ausgerüsteter und elektrisch leitender Formteile aller Art, zum Beispiel Filme, Folien, Bänder, Fasern, Platten, Halbzeug, Formkörper und Gehäuse für Verwendungszwecke, wie sie zuvor für die Pressmassen erwähnt wurden. Hierbei können die für die Kunststoffverarbeitung üblichen Verfahren angewendet werden, zum Beispiel Kalandrieren, Spritzgiessen, Spritzpressen, Extrudieren, Tiefziehen, Press- und Sinterverfahren.

Der feinteilige elektrisch leitende Füllstoff ist thermoplastisch verformbar, besonders bei einer Verarbeitung unter Druck und erhöhter Temperatur. Solche Verarbeitungsverfahren sind daher bevorzugt, da hiermit im allgemeinen eine höhere elektrische Leitfähigkeit erzielt werden kann. Die Verträglichkeit mit den Basispolymeren kann über die Wahl des sulfatierten Polyanions beeinflusst werden. Polyanionen mit funktionellen Gruppen, z.B. Hydroxylgruppen, können zu Vernetzungen mit entsprechenden Basispolymeren (z.B. Epoxidharze) führen. Die Formteile weisen bei guten mechanischen Eigenschaften hohe und dauerhafte elektrische Leitfähigkeiten auf, die bei Verwendung von Polyheteroaromaten als Polykation im allgemeinen mindestens 0,01 S/cm betragen. Die Leitfähigkeit kann durch Nachtempern der Formteile erhöht werden.

Ein weiterer Gegenstand der Erfindung ist die Verwendung der erfindungsgemässen Zusammensetzung zur Herstellung von elektrisch leitenden Formteilen.

Die nachfolgenden Beispiele erläutern die Erfindung näher. Die Leitfähigkeit wird nach der Vierpunktmethode gemessen. Prozentangaben sind Gewichtsprozente, wenn nicht anders vermerkt.

A) Herstellungsbeispiele für Polymere mit versalzten Sulfatgruppen.

Beispiel A1:

Persulfatiertes Phenoxyharz

142 g (0,5 mol) Phenoxyharz (polymeres Addukt aus Bisphenoldiglycid und Bisphenol A, Mw 28 000, Hersteller Union Carbide, Typ PKHH) werden in 750 ml DMF gelöst. Danach werden 0,55 mol (87,5 g) Pyridin-$SO_3$-Komplex zugegeben. Nach 2 h bei 50°C wird auf unter 10°C abgekühlt und 22 g NaOH gelöst in 150 ml Ethanol langsam zugetropft. Anschliessend wird unter reduziertem Druck das Pyridin abgedampft. Die Polymerlösung wird in 6 l Isopropanol gefällt, das Polymere abfiltriert und im Vakuum getrocknet. Ausbeute: 190 g (98 % d.Th.).

Beispiel A2:

Teilsulfatiertes Phenoxyharz

142 g (0,5 mol) Phenoxyharz gemäss Beispiel A1 werden in 750 ml DMF gelöst. Nach Zugabe von 26,5 g (0, 16 mol) Pyridin-$SO_3$-Komplex wird 2 h bei 50° gerührt, danach auf unter 10°C abgekühlt und mit Tributylamin neutralisiert. Das Pyridin wird unter reduziertem Druck abgezogen. Das Polymere wird in 10 l Wasser gefällt, filtriert, gewaschen und getrocknet. Ausbeute: 180 g (96 % d.Th.).

Beispiel A3:

Persulfatiertes Ethylen-Vinylalkohol-Copolymer

25 g eines vollverseiften Copolymers aus Ethylen und Vinylacetat mit 4,12 Mol Hydroxylgruppen pro kg Copolymer werden in einer 1:1 Mischung aus Xylol und N-Methylpyrrolidon bei 65 °C gelöst. Man lässt auf 40 °C abkühlen und gibt 0,05 mol im Lösungsmittelgemisch suspendierten Pyridin-$SO_3$-Komplex zu. Nach 2 h Rühren erhält man eine klare viskose Lösung, die man auf unter 10 °C abkühlt und mit Tetraethylammoniumhydroxid neutralisiert. Das Pyridin wird unter reduziertem Druck abgezogen, das Polymer mit Diethylether gefällt, filtriert, gewaschen und getrocknet. Man erhält ein Copolymer $-(CH_2-CH_2)_n-[CH_2-CH(OSO_3R)]_o-$ mit R gleich Tetraethylammonium, n/n+o=0,7 und o/n+o=0,3. Mit der Differentialthermoanalyse werden zwei Schmelzpunkte bei 90,5 °C und 225 °C bestimmt.

Beispiel A4:

Sulfatierung von teilverseiftem Polyvinylacetat

20 g eines zu 88 % verseiften Polyvinylacetats werden in 200 ml N-Methylpyrrolidon gelöst. Anschliessend gibt man unter Rühren portionsweise eine Lösung von 20,1 g Pyridin-$SO_3$-Komplex in 230 ml N-Methylpyrrolidon zu und rührt weitere 4 h. Die klare viskose Lösung lässt man in Diethylether tropfen, filtriert das ausgefallene Polymer ab und trocknet es (Ausbeute 82 %).

Beispiel A5:

Gemäss Beispiel A4 wird ein Polymer $-[CH_2-CH(OH)]_2-[CH_2-CH(OSO_3R)]_1-$ mit R gleich Tributylammonium und Schmelzpunkten von 93,5 °C und 279 °C erhalten.

B) Anwendungsbeispiele

Beispiel B1:

10 g (0,0259 mol) Polymer gemäss Beispiel A1 werden in einer Mischung von 135 ml Ethoxyethanol und 15 ml Wasser gelöst. Nach Zugabe von 5,2 g (0,077 mol) Pyrrol, wird bei 10°C eine Lösung von 34,1 g (0,21 mol) $FeCl_3$ in 30 ml Wasser zugetropft. Die Lösung verfärbt sich binnen kurzer Zeit schwarz. Das ausgefallene Pulver wird abfiltriert, mehrfach in Wasser gewaschen und im Vakuum getrocknet. Ausbeute: 13,2 g (91 % d.Th.). Die Leitfähigkeit eines Presslings (Pille mit 1 cm Durchmesser, Pressdruck 1 G-Pascal) beträgt 2,45 S/cm.

Beispiele B2-B5:

Man verfährt analog Beispiel B1, variiert aber das Ethoxyethanol/Wasser-Verhältnis. Die Ergebnisse sind in nachfolgender Tabelle dargestellt

| Beispiel No | Ethoxyethanol (ml) | Wasser (ml) | Ausbeute (%) | Leitfähigkeit (S/cm) |
|---|---|---|---|---|
| B2 | 100 | 0 | 46 | 3,9 |
| B3 | 135 | 15 | 91 | 2,45 |
| B4 | 35 | 135 | 88 | 5,9 |
| B5 | 75 | 75 | 85 | 6,6 |

Beispiel B6:

Eine Lösung aus 117 g Polymer gemäss Beispiel A2, 50 ml Pyrrol und 20 ml Wasser wird in einem trommelförmigen Reaktor bestehend aus einer drehbaren Walze (Anode) und einer zylindrischen Kathode bei einer Stromdichte von 3 $mA/cm^2$ drei Stunden elektrolysiert. Die pulverförmige Abscheidung (Dendrite) wird mechanisch von der Anode entfernt. Bei einer Verarbeitungstemperatur von 110°C wird aus dem Pulver bei 1 G-Pascal ein mechanisch stabiler Pressling (Quadrat, 4 x 4 x 0,5 cm) hergestellt. Die Leitfähigkeit beträgt 7 S/cm.

Beispiel B7:

Oxidation mit $(NH_4)_2S_2O_8/FeCl_3$

3,05 g Polymer gemäss Beispiel A3 werden bei 120 °C in 30 ml Methoxypropanol gelöst. Nach dem Abkühlen gibt man 10 ml Wasser und 2,01 g (30 mmol) Pyrrol zu und kühlt auf unter 10 °C ab. Unter kräftigem Rühren tropft man eine Lösung von 10,47 g (45 mmol) Ammoniumperoxodisulfat und 200 mg $FeCl_3$ in 60 ml Wasser zu. Man erhält ein schwarzes Pulver, Ausbeute 69 %. Eine gemäss Beispiel B1 gepresste Pille weist eine Leitfähigkeit von 2,9 S/cm auf.

Beispiel B8:

25 g Pulver gemäss Beispiel B5 werden in eine vorgeheizte Form gefüllt und bei 180 °C unter Druck (1 GPa) während 3, 4 und 5 Minuten zu einer Platte ( 12 x 12 x 0,2 cm) gepresst. Die Ergebnisse sind in nachfolgender Tabelle dargestellt:

| Presszeit (Minuten) | Leitfähigkeit (S/cm) |
|---|---|
| 3 | 1,933 |
| 4 | 2,663 |
| 4 | 3,523 |
| 5 | 7,393 |
| 5 | 6,333 |

Beispiel B9:

Es werden gemäss Beispiel B8 unter folgenden Bedingungen Platten gepresst:
a) bei Raumtemperatur,
b) bei 180 °C, und
c) die Platte gemäss a) wird bei 180 °C 10 Minuten getempert.
Das Ergebnis ist in nachfolgender Tabelle dargestellt:

| Versuch | Leitfähigkeit (S/cm) |
|---|---|
| a) | 2,9 |
| b) | 17,0 |
| c) | 10,19 |

Beispiel B10:

12 g (26,5 mmol) Polymer gemäss Beispiel A5 und 6,3 ml (70 mmol) Anilin werden in 100 ml Wasser gelöstund mit 5 ml Phosphorsäure (85 %-ig) versetzt. Dann kühlt man auf 5 °C ab und lässt unter Rühren eine Lösung von 4 g (17,5 mmol) $(NH_4)_2S_2O_8$ in 50 ml Wasser zutropfen. Nach einer Induktionsperiode von etwa 10 Minuten verfärbt sich die farblose Reaktionsmischung nach blaugrün. Man rührt noch 4 h, filtriert den Niederschlag ab, und wäscht mit leicht angesäuertem Wasser. Man erhält 2.5 g eines tiefgrünen Pulvers. Die elektrische Leitfähigkeit einer gepressten Pille beträgt 0,015 S/cm.

Beispiel B11:

Man löst unter starkem Rühren 1,5 g (13,3mmol) Polymer gemäss Beispiel A4 in 80 ml Wasser und versetzt die Lösung mit Salzsäure, Phosphorsäure bzw. Schwefelsäure, bis ein pH-Wert von etwa 1 bis 2 erreicht ist. Dann werden 100 mg (0,276 mmol) Emeraldinbase zugegeben. Die Suspension verfärbt sich nach kurzer Zeit über grün nach schwarz. Man rührt 3 Tage bei Raumtemperatur, filtriert den Niederschlag ab, wäscht mit leicht angesäuertem Wasser und trocknet das Pulver 2 Tage bei Raumtemperatur im Hochvakuum. Die Leitfähigkeit einer gepressten Pille und die Glasumwandlungstemperatur (Differentialthermoanalyse) sind in nachfolgender Tabelle dargestellt:

| Säurezugabe | Leitfähigkeit (S/cm) | Glasumwandlungs-temperatur (°C) |
|---|---|---|
| HCl | 0,089 | 210 |
| $H_3PO_4$ | 0,079 | 207 |
| $H_2SO_4$ | 0,097 | 212 |

Beispiel B12:

500 mg Polymer gemäss Beispiel A4 bzw. 1 g Polymer gemäss Beispiel A5 werden in 6 ml Wasser gelöst und die Lösung mit Phosphorsäure auf einen pH-Wert von 1 bis 2 eingestellt. Dann werden 100 mg (1,1 mmol) Leucoemeraldin zugegeben und die graue Suspension 2 h bei Raumtemperatur gerührt. Zu der Suspension lässt man die nachfolgend angegebenen Moläquivalente $H_2O_2$ zutropfen und rührt anschliessend 4 Tage bei Raumtemperatur. Das ausgefallene schwarze Produkt wird abfiltriert und getrocknet. Die Abhängigkeit der Leitfähigkeit einer gepressten Pille von der zugesetzten Menge $H_2O_2$ ist in nachfolgender Tabelle dargestellt (Tg = Glasumwandlungstemperatur):

| Moläquivalente $H_2O_2$ | Leitfähigkeit (S/cm) bei Polymer | |
|---|---|---|
| | Beispiel A4 (Tg 170 °C) | Beispiel A5 (Tg 218 °C) |
| 1,00 | 0,038 | 0,0014 |
| 0,75 | 0,020 | 0,0031 |
| 0,50 | 0,00084 | 0,0035 |
| 0,25 | - | 0,00085 |

Beispiel B13:

60 Gew.% des in Beispiel A1 verwendeten Phenoxyharzes und 40 Gew.% des Pulvers gemäss Beispiel B1 werden mechanisch innig vermischt. Die Mischung wird in einer Heizpresse bei 110°C zu einem mechanisch stabilen Formkörper verpresst. Die Leitfähigkeit beträgt 0,034 S/cm.

Beispiel B14:

Das Pulver gemäss Beispiel B5 wird mit einem thermoplastischen Polymerpulver in einer Kugelmühle vermischt, in eine vorgeheizte Form gefüllt und unter Druck bei 180 bis 200 °C während 5 Minuten zu einer Platte gepresst. Die Mengenverhältnisse und Leitfähigkeiten sind in nachfolgender Tabelle dargestellt:

| Gew.-% thermoplastisches Polymerpulver | Gew.-% Pulver gemäss Beispiel B5 | Leitfähigkeit (S/cm) |
|---|---|---|
| 95 PVC | 5 | 0,023 |
| 90 PVC | 10 | 0,143 |
| 85 PVC | 15 | 0,503 |
| 80 PVC | 20 | 0,853 |
| 75 PVC | 25 | 0,853 |
| 70 PVC | 30 | 1,803 |
| 65 PVC | 35 | 1,803 |
| 60 PVC | 40 | 2,303 |
| 55 PVC | 45 | 2,533 |
| 65 PE | 35 | 1,113 |
| 65 PP | 35 | 0,783 |

PVC: niedermolekular, Hersteller EGA; PE: Hostalen GF 7740, PP: PP-PIV 29, Amoco.

Beispiel B15:

35 Gew.% des Pulvers gemäss Beispiel B5 werden unter Rühren in der Lösung eines thermoplastischen Polymers in Methylenchlorid bzw. Tetrahydrofuran gelöst und das Polymer durch Zugabe von Methanol gefällt. Der Niederschlag wird abfiltriert, getrocknet und das erhaltene Pulver zu einer Platte verpresst. Die verwendeten Polymeren und die Leitfähigkeit sind in nachfolgender Tabelle dargestellt:

| Thermoplastisches Polymer | Leitfähigkeit (S/cm) |
|---|---|
| Polystyrol (165N) | 0,143 |
| ABS (Teluran 8775) | 0,033 |
| Polycarbonat (Typ 5905) | 0,013 |
| Polyaryl (Ardel D-100, Amoco) | 0,093 |
| Polysulfon (Victrex 4800P) | 0,043 |

Beispiel B16:

In einem auf 180 °C vorgeheizten Kneter (Brabender Plasticorder) wird Polyethylen (Statoil 620, Solvay) vorgelegt und in der Schmelze mit dem Pulver gemäss Beispiel B5 vermischt. Die so erhaltene Masse wird in einer Heizpresse unter Druck bei 190 °C zu Platten gepresst. Die zugegebenen Mengen und die Leitfähigkeit sind in nachfolgender Tabelle dargestellt:

| Gew.-% Pulver gemäss Beispiel B5 | Leitfähigkeit (S/cm) |
|---|---|
| 60 | 0,07 |
| 50 | 0,02 |
| 40 | 0,003 |
| 30 | 0,0004 |

Beispiel B17:

Das Pulver gemäss Beispiel B5 und ein Epoxynovolak mit einem Novolakhärter werden in einer Kugelmühle und dann in einer auf 180 °C geheizten Pressform unter Druck 3 Minuten gehärtet. Die Zusatzmengen und Leitfähigkeiten sind in nachfolgender Tabelle dargestellt:

| Gew.-% Pulver gemäss Beispiel B5 | Leitfähigkeit (S/cm) |
|---|---|
| 30 | 0,573 |
| 50 | 0,073 |
| 60 | 0,443 |
| 70 | 0,603 |
| 80 | 0,663 |
| 85 | 0,133 |

Beispiel B18:

Nach dem Verfahren gemäss Beispiel B17 wird ein mit Bisphenol-A vorverlängerter Bisphenol-A-Diglycidylether (Epoxidäquivalentgewicht 1588) mit einem Härter und dem Pulver gemäss Beispiel B5 vermischt, zu einer Pille verpresst und bei 150 °C gehärtet. Weitere Angaben befinden sich in nachfolgender Tabelle:

| Gew.-% Pulver gemäss Beispiel B5 | g Glycidylether | g Härter | Leitfähigkeit (S/cm) |
|---|---|---|---|
| 30 | 80,5 | 2,0 A | 0,3 |
| 50 | 73,2 | 1,5 B | 0,6 |
| 60 | 73,7 | 1,3 B | 0,2 |
| 70 | 80,4 | 2,0 A | 0,2 |
| 80 | 75,0 | 0,03 C | 0,4 |
| 85 | 75,6 | 5,0 D, 1,5 | 0,9 |

A = Bis-(diaminodiphenyl)-methan

B = 2-Methylimidazol

C = $BF_3$-Diethyletherat

D = 5-(2',5'-Dioxotetrahydrofuryl)-3-methyl-cyclohexan-1,2-dicarbonsäureanhydrid.

**Patentansprüche**

1. Pressmasse in Form von Teilchen aus a) mindestens einem Polyheteroaromaten oder einem Anilin in oxidierter, polykationischer Form, und b) mindestens einem Polyanion eines thermoplastischen Polymeren mit sulfatierten Alkoholgruppen

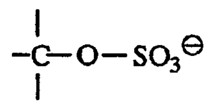

in wiederkehrenden Struktureinheiten.

2. Pressmasse gemäss Anspruch 1, worin der Polyheteroaromat aus 5- oder 6-gliedrigen Ringen gebildet ist, die 1 bis 3 Heteroatome aus der Gruppe O, S und N enthalten, und deren C-Atome unsubstituiert oder mit $C_1$-$C_{16}$-Alkyl substituiert sind.

3. Pressmasse gemäss Anspruch 2, worin der 5- oder 6-gliedrige Ring ausgewählt ist aus der Gruppe Pyrrol, Thiophen, Furan, 2,2'-Bipyrrol, 2,2'-Bithiophen, 2,2'-Bifuran, Thiazol, Oxazol, Thiadiazol und Imidazol.

4. Pressmasse gemäss Anspruch 2, worin der Polyheteroaromat aus einem Pyrrol der Formel

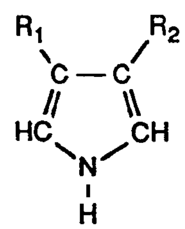

gebildet ist, worin $R_1$ und $R_2$ unabhängig voneinander H oder $C_1$-$C_{16}$-Alkyl oder $C_1$-$C_{16}$-Alkoxy oder $R_1$ und $R_2$ zusammen Tri- oder Tetramethylen bedeuten.

5. Pressmasse gemäss Anspruch 1, worin pro Struktureinheit des Polyheteroaromaten 0,1 -0,5 Struktureinheiten mit sulfatierten Alkoholgruppen

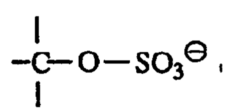

enthalten sind.

6. Pressmasse gemäss Anspruch 5, worin 0,2 bis 0,4 Struktureinheiten mit sulfatierten Alkoholgruppen enthalten sind.

7. Pressmasse gemäss Anspruch 1, worin das thermoplastische Polymer in Form von versalzten sulfarierten Alkoholgruppen

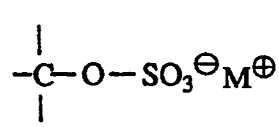

eine Tg von -100 bis 350°C aufweist, und $M^{\oplus}$ ein Alkalimetall-oder Ammoniumkation bedeutet.

8. Pressmasse gemäss Anspruch 7, worin die Tg -50 bis 250°C beträgt.

9. Pressmasse gemäss Anspruch 1, worin das Verhältnis von freien Alkoholgruppen zu sulfatierten Alkoholgruppen

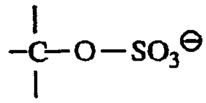

im thermoplastischen Polymer 50:1 bis 1:50 beträgt.

10. Pressmasse gemäss Anspruch 9, worin das Verhältnis 10:1 bis 1:10 beträgt.

11. Pressmasse gemäss Anspruch 1, worin die Teilchengrösse 1 bis 5000 µm beträgt.

12. Pressmasse gemäss Anspruch 1, worin das thermoplastische Polymer ein zumindest teilweise sulfatiertes Polyaddukt aus a) einer Glycidylverbindung mit durchschnittlich mehr als einer Epoxidgruppe und b) einem Diol ist, das Gruppen in der

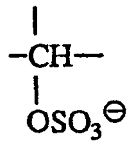

Polymerkette enthält.

13. Pressmasse gemäss Anspruch 12, worin das Polyaddukt
a) 100 bis 5 Mol-% gleiche oder verschiedene Struktureinheiten der Formel I

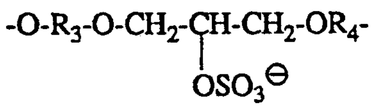 (I)

und
b) 95 bis 0 Mol-% gleiche oder verschiedene Struktureinheiten der Formel II

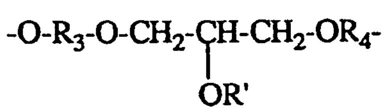 (II)

enthält, bezogen auf das Polyaddukt, wobei $R_3$ und $R_4$ unabhängig voneinander den um zwei Hydroxylgruppen verminderten Rest eines Diols mit aliphatischen oder aromatischen Diolgruppen darstellen, und R' H, $C_1$-$C_{20}$-Alkyl, $C_1$-$C_{20}$-Acyl oder mit einem $C_1$-$C_{20}$-Kohlenwasserstoffrest substituiertes Aminocarbonyl bedeutet.

14. Pressmasse gemäss Anspruch 13, worin $R_3$ und $R_4$ unabhängig voneinander einen Rest der Formel III

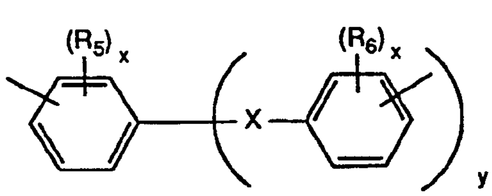 (III)

darstellen, worin X eine direkte Bindung, $C_1$-$C_4$-Alkylen, $C_2$-$C_{12}$-Alkyliden, $C_5$-$C_8$-Cycloalkyliden, -O-, -S-, -SO-, $-SO_2-$, -CO-, $-CO_2-$, -N($C_1$-$C_4$-Alkyl)- oder $-Si(CH_3)_2-$ bedeutet, $R_5$ und $R_6$ unabhängig voneinander

H, Halogen, $C_1$-$C_4$-Alkyl oder $C_1$-$C_4$-Alkoxy sind, und x 1 oder 2 bedeutet und y für 0 oder 1 steht.

**15.** Pressmasse gemäss Anspruch 14, worin $R_3$ und $R_4$ den Rest

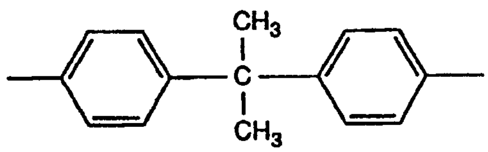

bedeuten.

**16.** Pressmasse gemäss Anspruch 1, worin das thermoplastische Polymer ein mindestens teilweise sulfatiertes Homo- oder Copolymer von Acrylaten oder Methacrylaten mit einer Gruppe

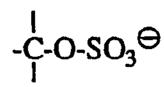

in der Estergruppe ist.

**17.** Pressmasse gemäss Anspruch 16, worin das Polymer
a) 100 bis 5 Mol% gleiche oder verschiedene Struktureinheiten der Formel IV

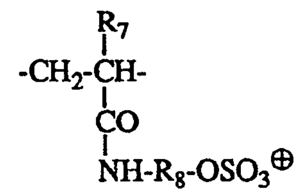

(IV)

und
b) 95 bis 0 Mol% gleiche oder verschiedene Struktureinheiten der Formel V

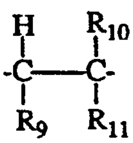

(V)

enthält, bezogen auf das Polymer, worin $R_7$ H oder Methyl bedeutet, $R_8$ für lineares oder verzweigtes $C_2$-$C_{18}$-Alkylen, Poly($C_2$-$C_6$-oxaalkylen) mit 2 bis 6 Oxaalkyleneinheiten, $C_6$-$C_8$-Cycloalkylen, Phenylen, Benzylen oder Xylylen oder die Gruppe

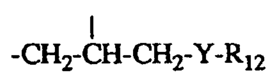

Steht, Y -O-,

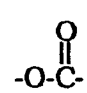

oder -N($C_1$-$C_4$-Alkyl)- bedeutet, und $R_{12}$ $C_1$-$C_{18}$-Alkyl, $C_5$-$C_7$-Cycloalkyl, ($C_1$-$C_{12}$-Alkyl)-$C_5$-$C_7$-cycloalkyl, Phenyl, ($C_1$-$C_{12}$-Alkyl)phenyl, Benzyl oder ($C_1$-$C_{12}$-Alkyl)benzyl darstellt, $R_9$ für H, $C_1$-$C_6$-Alkyl, -$COOR_{12}$ oder -$COO^{\ominus}$ steht, $R_{10}$ H, F, Cl, CN oder $C_1$-$C_6$-Alkyl bedeutet, und $R_{11}$ H, F, Cl, CN, $R_{12}$-O-, $C_1$-$C_{12}$-Al-

kyl, -COO⊖, -$COOR_{12}$, -$COAR_8$-OH, -OCO-$R_{12}$ oder Phenyl darstellt, wobei $R_8$ und $R_{12}$ die zuvor angebenen Bedeutungen haben und A für -O- oder -NH- steht.

**18.** Pressmasse gemäss Anspruch 17, worin in Formel IV $R_7$ für H oder $CH_3$ und $R_8$ für lineares oder verzweigtes $C_2$-$C_6$-Alkylen, Cyclopentylen oder Cyclohexylen stehen, und in Formel V $R_9$ H bedeutet, $R_{10}$ H oder Methyl darstellt, und $R_{11}$ -$COOR_{12}$ oder -$COOR_8OH$ bedeutet.

**19.** Pressmasse gemäss Anspruch 1, worin das thermoplastische Polymere ein sulfatiertes Polyimid mit Strukturelementen der Formel VII

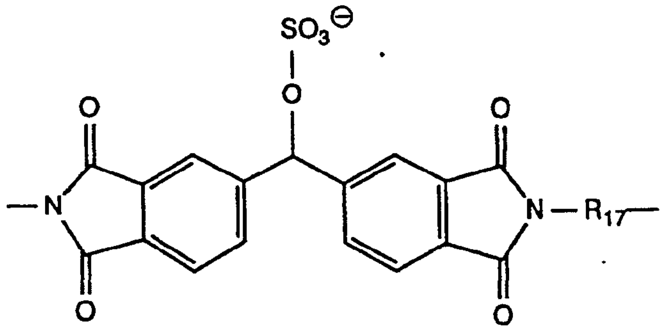

(VII)

darstellt, worin $R_{17}$ für unsubstituiertes oder mit $C_1$-$C_6$-Alkyl oder $C_1$-$C_6$-Alkoxy substituiertes $C_6$-$C_{12}$-Arylen oder $C_5$-$C_8$-Cycloalkylen oder für den Rest

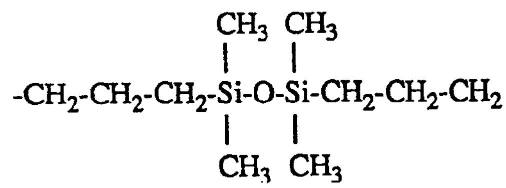

steht.

**20.** Pressmasse gemäss Anspruch 1, worin das thermoplastische Polymere ein sulfatiertes Polyamid mit Strukturelementen der Formel VIII

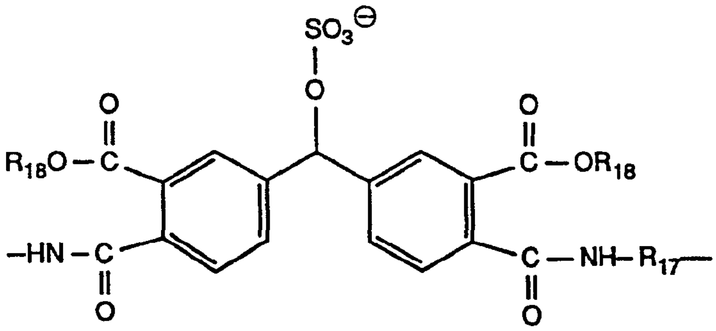

(VIII)

darstellt, worin
$R_{17}$ für unsubstituiertes oder mit $C_1$-$C_6$-Alkyl oder $C_1$-$C_6$-Alkoxy substituiertes $C_6$-$C_{12}$-Arylen oder $C_5$-$C_8$-Cycloalkylen oder für den Rest

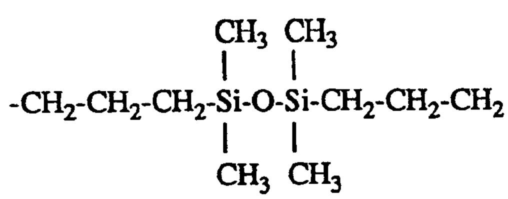

steht und

$R_{18}$ $C_1$-$C_{12}$Alkyl bedeutet.

**21.** Pressmassen gemäss Anspruch 1, worin das thermoplastische Polymer ein sulfatiertes Polymer eines teilhydroxylierten Polybutadiens oder Polyisoprens ist.

**22.** Verfahren zur Herstellung einer Pressmasse gemäss Anspruch 1, dadurch gekennzeichnet, dass man
a) in einer organischen, wässrig-organischen oder wässrigen Lösung einen Heteroaromaten oder ein Anilin in Gegenwart eines polymeren Salzes elektrochemisch polymerisiert und danach die pulverförmige Abscheidung von der Anode entfernt, oder
b) einen Heteroaromaten oder ein Anilin in Gegenwart eines polymeren Salzes und eines inerten Lösungsmittels mit einem Oxidationsmittel umsetzt.

**23.** Zusammensetzung aus
a) einem thermoplastischen, duroplastischen oder strukturell vernetzten Polymer, dem b) ein elektrisch leitender feinteiliger Füllstoff aus a1) mindestens einem Polyheteroaromaten oder einem Anilin in oxidierter, polykationischer Form, und b1) mindestens einem Polyanion eines thermoplastischen Polymeren mit sulfatierten Alkoholgruppen

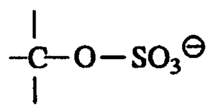

in wiederkehrenden Struktureinheiten einverleibt ist.

**24.** Zusammensetzung gemäss Anspruch 23, dadurch gekennzeichnet, dass 99,9 bis 10 Gew.-% der Komponente a) und 0,1 bis 90 Gew.-% der Komponente b) enthalten sind.

**25.** Verwendung einer Pressmasse gemäss Anspruch 1 oder einer Zusammensetzung gemäss Anspruch 23 zur Herstellung von elektrisch leitenden Formkörpern.

**26.** Verwendung von pulverförmigen Pressmassen gemäss Anspruch 1 als elektrisch leitenden Füllstoff für Polymere.